# DEMANDE DE BREVET EUROPEEN

(11) **EP 0 870 913 A1**
(43) Date de publication de la demande: **14.10.1998**
(21) Numéro de dépôt: 98400816.9
(22) Date de dépôt: 06.04.1998
(51) Int. Cl.: F02B 27/04, F01N 7/18

(54) **Pot de détente pour un échappement de moteur à deux temps**

(30) Priorité: 07.04.1997 FR 9704211
(71) Demandeur: Godou, Alain, 41800 Montoire sur le Loir (FR)
(72) Inventeur: Godou, Alain, 41800 Montoire sur le Loir (FR)
(74) Mandataire: Cabinet HERRBURGER

(57) **Abrégé**

Pot de détente composé de trois parties (I,II,III), chaque partie étant formée d'au moins deux éléments (10-20;20-23;31-33), de longueur réglable par vissage pour définir les différents paramètres de fonctionnement de ce pot suivant le moteur auquel il est associé. Les réglages se bloquent par un contre écrou (14,24,34).

## Description

La présente invention concerne un pot de détente pour l'échappement d'un moteur à deux temps.

Le problème de l'échappement des moteurs à deux temps, des motos et des motocycles à combustion interne est celui du mouvement vibratoire des gaz d'échappement. L'étude de ce mouvement et le réglage de la longueur du tuyau sonore constitué par l'échappement est un élément important pour le réglage du moteur car l'onde de pression des gaz d'échappement engendre une dépression suivie d'une pression à la sortie du cylindre vers l'échappement, la dépression favorisant l'évacuation du cylindre et la pression retenant la sortie des gaz du cylindre vers l'échappement. Cette pression à effet antagoniste de la dépression est utilisée pour éviter que les gaz frais de remplissage du cylindre ne passent dans l'échappement.

Ce problème est particulièrement accentué dans le cas des moteurs à deux temps puisque ceux-ci ne comportent pas de soupapes.

Accorder un échappement signifie régler ses caractéristiques de façon que l'onde de pression de retour arrive à l'instant approprié sur la sortie du cylindre.

Les échappements des moteurs à deux temps équipant certains cycles et motocycles, par exemple de 50cm³ et de 125cm³, sont réalisés par le fabricant avec des caractéristiques moyennes, pour le type de moteur à équiper. Un pot d'échappement d'un moteur à deux temps n'est jamais adapté de façon particulière au moteur auquel il est associé. Or, les caractéristiques des moteurs à deux temps varient de manière très particulière, d'un moteur à l'autre pour une même série de moteurs.

Il existe un pot de détente pour l'échappement d'un moteur à deux temps ayant un corps variable. Ce corps varie pendant l'utilisation du moteur. Il subit les variations de pression et de débit des gaz d'échappement et s'allonge ou se raccourcit.

Toutefois un tel pot est d'une construction relativement compliquée et dans aucun cas il n'est pas accordé de manière précise en fonction du moteur qu'il équipe.

La présente invention a pour but de remédier à ces inconvénient et concerne à cet effet un pot d'échappement pour un moteur à deux temps, caractérisé en ce qu'il se compose d'au moins une partie formée d'au moins deux éléments, de longueur réglable notamment par vissage pour définir les différents paramètres de fonctionnement de ce pot d'échappement suivant le moteur auquel il est associé, le réglage effectué étant fixe pendant l'utilisation.

Ce pot est accordé en fonction du moteur à deux temps particulier qu'il équipe. Le ou les réglages permettent d'accorder les paramètres du pot au moteur. Dans le cas d'éléments de longueur réglable par vissage, ces réglages se font grâce à des filetages qui assurent une certaine voire une bonne étanchéité entre les deux parties vissées l'une sur l'autre. Cette étanchéité est complétée par le contre écrou. De plus, lorsque le réglage est fait, on rend la liaison étanche avec de la pâte d'étanchéité ou un système de joint.

Cette liaison solidarise également les pièces et forme un ensemble monobloc sur le plan de la fréquence de résonance propre.

Le filetage facilite le réglage car il permet un repérage et un ajustage précis pour accorder l'échappement.

Le repérage, c'est-à-dire l'augmentation ou la diminution de longueur par rapport à une référence donnée, permet de faire un premier réglage grossier du pot suivant le moteur qu'il équipe. Puis, à partir de cette position de réglage, il est possible d'affiner pour avoir l'accord précis. Cet accord précis est très simple à réaliser puisque l'utilisateur fait des tentatives en réglant en plus ou moins autour de la position idéale qu'il atteindra ainsi par des approches successives. Pour cela il compte le nombre de tours de vissage qu'il ajoute ou qu'il retranche, tours qui correspondent à une longueur d'allongement ou de raccourcissement du pot. Cela permet de revenir en arrière ou de modifier le réglage, de manière très simple en vissant ou en dévissant d'un ou quelques tours, comptés.

Suivant d'autres caractéristiques intéressantes :
- la première partie se compose d'une partie conique dont la grande base est tournée vers l'aval dans le sens de circulation des gaz d'échappement, et qui se termine à l'amont par un manchon fileté vissé sur un embout fileté pour régler, dans la plage de réglage, l'accord de cette première partie qui est alors bloquée,
- la première partie est munie en entrée d'une partie hémisphérique recevant une rotule d'articulation de la partie amont pour permettre d'incliner le pot par rapport à la direction amont autour de cette liaison à rotule,
- la seconde partie se compose d'une partie conique amont, se terminant, en aval, du côté de sa grande base, par un manchon cylindrique fileté et d'une partie aval de conicité renversée, dont la grande base amont se prolonge du côté amont par un manchon fileté vissé sur le manchon fileté de la première partie pour réaliser une longueur de réglage permettant d'accorder cette seconde partie du pot et de bloquer le réglage,
- la troisième partie se compose d'un manchon fileté recevant le manchon fileté solidaire du tube de fuite, pour régler cette troisième partie dans la plage définie par la longueur de réglage correspondant à la plage de vissage des manchons et bloque le réglage,
- les manchons filetés sont bloqués par un contre écrou de manière à bloquer le réglage et chaque zone de réglage est rendue étanche par de la pâte d'étanchéité,
- les manchons filetés sont soudés aux pièces de liaison de forme conique ou tubulaire en tôle plus fine que les manchons de réglage.

La présente invention sera décrite ci-après de manière plus détaillée à l'aide d'un exemple de réalisation d'un pot de détente d'un échappement de moteur à deux temps selon l'invention :
- la figure 1 est une vue développée du pot de détente,
- la figure 2 est une vue de détail à échelle agrandie de la zone de réglage de la première partie du pot de détente,
- la figure 3 est une vue de détail de l'assemblage au niveau de la partie centrale,
- la figure 4 est une vue de détail à échelle agrandie de la troisième zone de réglage de la troisième partie du pot selon l'invention.

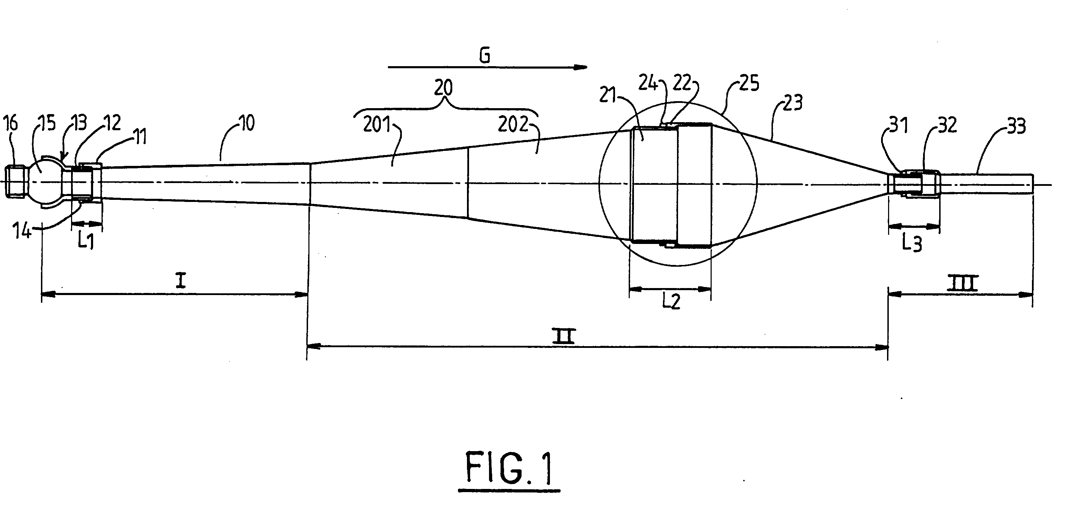

Selon la figure 1, le pot de détente d'un échappement de moteur à deux temps se compose d'une première partie I reliée directement au moteur suivie dans le sens de circulation des gaz (flèche G), d'une seconde partie II et enfin d'une troisième partie III, elle-même reliée au silencieux, non représenté.

Dans la figure 1, pour faciliter la compréhension de l'invention, le pot de détente est représenté développé, c'est-à-dire avec un axe rectiligne. En fait, ce pot présente une forme courbe plus ou moins accentuée en fonction de la disposition du moteur et de la géométrie de la moto.

La première partie I se compose d'un cône 10, allongé, terminé à l'amont par un manchon fileté 11 qui se visse sur la partie filetée correspondante 12 d'un embout 13, en forme de cavité sphérique, recevant une pièce 15, amont, en forme de rotule, elle-même munie d'un manchon de vissage 16. Ce manchon 16 est directement vissé sur la sortie du moteur.

La liaison vissée entre le manchon fileté 11 et la partie filetée 12 de l'embout 13 se bloque par un contre écrou 16.

Le logement sphérique 13 recevant la rotule 15 permet une orientation angulaire à ce niveau.

Les parties vissées l'une sur l'autre 11, 12 donnent une longueur de réglage L1.

Cette première partie I du pot de détente permet de régler le régime, c'est-à-dire la vitesse de rotation maximale et la vitesse de rotation minimale du moteur.

La seconde partie II, faisant suite au cône 10, se compose d'une partie conique 20 en une ou deux pièces 201, 202, de conicité différente, la pièce aval 202 se termine par un manchon fileté 21, cylindrique, sur lequel se visse l'extrémité filetée 22 de l'autre partie conique 23, en aval. La partie filetée 22 est vissée sur la partie 21 et le blocage se fait à l'aide d'un contre écrou 24.

La partie conique 23, dont la conicité est opposée de celle de la partie 20, se termine par sa petite base, en aval.

Cette seconde partie II du pot d'échappement définit une longueur de réglage L2.

Le réglage de la seconde partie II (après avoir fait le réglage de la partie I), est destiné à régler le couple à l'intérieur de la plage d'utilisation du moteur.

La seconde partie II est suivie de la troisième et dernière partie III du pot. Cette troisième partie se compose d'un manchon fileté 31 vissé dans un manchon fileté 32 porté par un tube de fuite 33. La plage de réglage, par les manchons 31, 32, porte la référence L3.

Cette troisième partie du pot de détente sert à régler l'allonge, c'est-à-dire la réserve de puissance du moteur au voisinage du régime maximum.

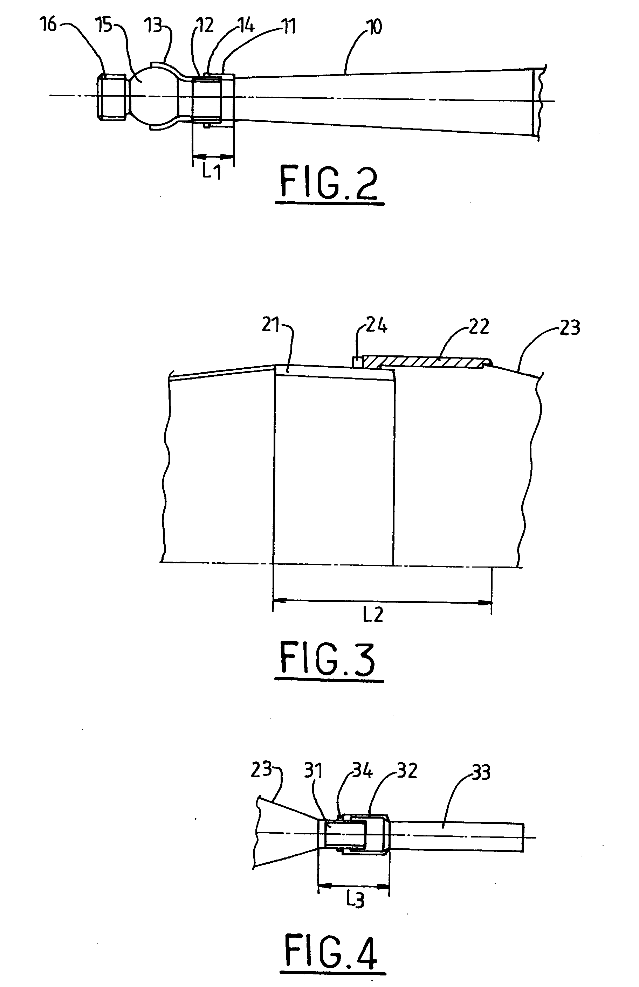

La figure 2 montre à échelle agrandie la partie de réglage de la première partie I du pot de détente.

La figure 3 montre, à échelle agrandie, la partie 25 de la figure 1. Cette figure agrandie laisse apparaître la partie filetée 21 qui reçoit la partie filetée 22, l'ensemble se bloquant à l'aide du contre écrou 24.

La figure 4 montre à échelle agrandie la zone de réglage L3 de la troisième partie III montrant le manchon fileté 32 vissé sur le manchon fileté 31, le réglage se bloquant avec le contre écrou 34.

De façon générale, les figures 1, 2, 3, 4 montrent que les zones de réglage 11, 12, pour la partie I, 21, 22, pour la partie II et 31, 32 pour la partie III, sont constituées chaque fois par des manchons filetés soudés à des parties en tôle comme la partie conique 10, les parties coniques 21, 23 ou les parties 23 et 33.

Comme déjà indiqué ci-dessus, le réglage de ce pot se fait en fonction du moteur qu'il équipe. Pour cela, on procède par le réglage de la longueur L1 pour définir le régime maximum et le régime minimum. Puis, ce réglage étant bloqué, on effectue le réglage de la partie II, c'est-à-dire du couple dans la plage d'utilisation et, enfin, on effectue le réglage de la partie III, c'est-à-dire l'allonge.

Lorsqu'un réglage est terminé, on bloque ce réglage par le contre écrou correspondant.

Lorsque l'ensemble est réglé, c'est-à-dire lorsque le pot d'échappement est accordé précisément, on peut compléter l'étanchéité des liaisons avec une pâte d'étanchéité que l'on applique autour des manchons vissés et des écrous de blocage.

Bien que la liaison par vissage des éléments constituant les différentes parties réglables constitue une solution préférentielle, d'autres moyens de réglage sont envisageables pour modifier la longueur des parties à régler. Ces moyens de réglage se bloquent une fois le réglage effectué.

Le pot d'échappement selon l'invention, décrit selon un mode de réalisation ci-dessus, peut prendre différentes formes courbes, en fonction de la géométrie de l'engin qu'il est destiné à équiper.

## Revendications

1. Pot de détente pour l'échappement d'un moteur à deux temps, caractérisé en ce qu' il se compose de trois parties (I, II, III) dont au moins une partie est formée de deux éléments (10 ; 11, 12, 20, 23 ; 21, 22 ; 31, 33, 32) de longueur réglable pour définir les différents paramètres de fonctionnement de ce pot d'échappement suivant le moteur auquel il est associé, le réglage effectué étant fixe (14, 24, 34) et la seconde partie (II) se compose d'une partie conique amont (20), se terminant, en aval, du côté de sa grande base, par un manchon cylindrique fileté (21) et d'une partie aval (23) de conicité renversée, dont la grande base amont se prolonge du côté amont par un manchon fileté (22) vissé sur le manchon fileté (21) de la première partie (20) pour réaliser une longueur de réglage (L2) permettant d'accorder cette seconde partie (II) du pot et de bloquer le réglage (24).

2. Pot de détente selon la revendication 1, caractérisé en ce que la première partie (I) est munie en entrée d'une partie hémisphérique (13) recevant une rotule d'articulation (15) de la partie amont pour permettre d'incliner le pot par rapport à la direction amont autour de cette liaison à rotule (13, 15).

3. Pot de détente selon la revendication 1, caractérisé en ce que la première partie se compose d'une partie conique (10) dont la grande base est tournée vers l'aval dans le sens de circulation des gaz d'échappement, se terminant à l'amont par un manchon fileté (11) vissé sur un embout fileté (12) pour régler, dans la plage de réglage (L1), l'accord de cette première partie (I) qui est alors bloquée (16).

4. Pot de détente selon la revendication 1, caractérisé en ce que la troisième partie (III) se compose d'un manchon fileté (31) recevant le manchon fileté (32) solidaire du tube de fuite (33), pour régler cette troisième partie dans la plage définie par la longueur de réglage (L3) correspondant à la plage de vissage des manchons (31, 32), et bloque le réglage (34).

5. Pot de détente selon l'une quelconque des revendications 2, 3, 4, caractérisé en ce que les manchons filetés (11, 12, 21, 22, 31, 32) sont bloqués par un contre écrou (14, 24, 34) de manière à bloquer le réglage et chaque zone de réglage est rendue étanche par de la pâte d'étanchéité.

6. Pot de détente selon l'une quelconque des revendications 1 à 5, caractérisé en ce que les manchons filetés (11, 12, 21, 22, 31, 32) sont soudés aux pièces de liaison de forme conique ou tubulaire (10, 20, 23, 33) en tôle plus fine que les manchons de réglage.
